# EUROPEAN PATENT APPLICATION

(11) **EP 2 233 973 A1**
(43) Date of publication of application: **29.09.2010**
(21) Application number: 09155980.7
(22) Date of filing: 24.03.2009
(51) Int. Cl.: G03B 21/16

(54) **A cooling method, device and projector**

(71) Applicant: Hisense Beijing Electric Co. , Ltd., Daxing, District Beijing 102600 (CN); Hisense Group Co., Ltd., Laoshan Zone Qingdao 266100 (CN); Hisense Electric Co., Ltd, Qingdao Economic and Development Zone Qingdao Shandong 266555 (CN)
(72) Inventor: Li, Chunpu, Quingdao City Shandong Province (CN)
(74) Representative: HOFFMANN EITLE

(57) **Abstract**

The present invention relates to the field of cooling technologies and, particularly, discloses a heat source cooling method, a cooling air channel (4) and a projector capable of ensuring desired normal operating temperatures of a heat source (5). The heat source cooling method comprises the steps of: blowing (101) a cooling air flow towards a heat source (5); and splitting (102) the cooling air flow into a first split air flow and a second split air flow, wherein the first split air flow is blowing towards and directly cooling a first portion of the heat source, the second split air flow is blowing towards and directly cooling a second portion of the heat source, and other portions of the heat source (5) are been cooling indirectly by heat conduction via the first portion and/or the second portion. The present invention is adapted to cool the heat source (5).

## Description

### BACKGROUND OF THE INVENTION

### 1. Technical Field

The present invention relates to the field of cooling technologies, and particularly, to a heat source cooling method, a cooling air channel and a projector.

### 2. Description of Related Art

Projectors are widely used in education, businesses and families. A typical projector generally comprises a housing, a light source disposed in the housing and corresponding heat dissipation mechanisms and so on. During the operation of the projector, the heat source generates massive heat, most of which are emitted into the surroundings of the light source in form of heat energy. If such heat is not duly dissipated, normal operation and service life of the projector will be severely compromised.

As shown in FIG 1, China Patent No. ZL 200520002683.0 discloses a projector bulb cooling apparatus, which comprises a bulb device 1, a first air blower 2 and a second air blower 3. The bulb device 1 further comprises a lead 11, a first metal foil 12 and a second metal foil 13. At a juncture of the back end of the first metal foil 12 and the front end of the second metal foil 13, a wick portion 14 is formed.

The first air blower 2 is provided with a first air channel 21, which is adapted to guide the cooling air drawn by the first blower 2 towards the wick portion 14 and the second metal foil 13 to cool the wick portion 14 and the second metal foil 13; the second blower 3 is provided with a second air channel 31, which is aligned with the lead 11 and the first metal foil 12 so that cooling air drawn by the second air blower 3 is guided to cool the lead 11 and the first metal foil 12.

However, in practical applications, different operating temperatures are required for the lead 11, the first metal foil 12, the second metal foil 13 and the wick portion 14. Specifically, the wick portion 14 needs to be maintained at a normal operating temperature of 910±30°C, while the lead 11, the first metal foil 12 and the second metal foil 13 need to be maintained at a normal operating temperature of below 350°C respectively.

Consequently, cooling the bulb device directly with a cooling air flow drawn by the blowers tends to cool the wick portion to a much lower temperature, making it difficult for the wick portion to obtain a desired normal operating temperature.

Besides, to cool different locations of the heat source, a plurality of air channels has to be arranged in the prior art, which adds to both cost and space occupation of the product.

### BRIEF SUMMARY OF THE INVENTION

The objective of the present invention is to provide a heat source cooling method adapted to ensure desired normal operating temperatures of the heat source.

To this end, the present invention adopts the following technical solution:
A heat source cooling method, comprising: blowing a cooling air flow towards a heat source;
   and
splitting the cooling air flow into a first split air flow and a second split air flow, wherein the first split air flow is blowing towards and directly cooling a first portion of the heat source, the second split air flow is blowing towards and directly cooling a second portion of the heat source, and other portions of the heat source are been cooling indirectly by heat conduction via the first portion and/or the second portion.

According to the heat source cooling method of the present invention, because for the heat source that requires different normal operating temperatures for different portions, the first portion and the second portion are cooled directly by the cooling air flows and other portions of the heat source are cooled indirectly by heat conduction via the first portion and/or the second portion, the cooling method that uses the direct cooling and the indirect cooling in combination is adapted to prevent temperatures of the first portion and the second portion from rising too high while still preventing other portions of the heat source from falling to a too low temperature, thereby to ensure the desired normal operating temperatures of the heat source.

Another objective of the present invention is to provide a cooling air channel that has a decreased cost.

To this end, the present invention adopts the following technical solution:
A cooling air channel, comprising an air inlet and an air outlet, wherein a splitter plate is disposed at the air outlet to split a cooling air flow blown towards the heat source into a first split air flow and a second split air flow.

According to the cooling air channel disclosed in this invention, because the splitter plate is able to split the cooling air flow blown towards the heat source into the first split air flow and the second split air flow, multiple portions of the heat source can be cooled at the same time by the cooling air channel when the first split air flow is blown towards and directly cools a portion of the heat source and the second split air flow is blown towards and directly cools another portion of the heat source. As compared to the prior art, this reduces the number of cooling air channels to be used and, thereby, decreases the cost.

Yet another objective of the present invention is to provide a projector capable of ensuring desired normal operating temperatures of a projector light source.

To this end, the present invention adopts the following technical solution:
A projector comprising a cooling air channel, wherein the cooling air channel is provided with a cooling fan at an air inlet thereof and with a projector light source at an air outlet thereof, and a splitter plate is further disposed at the air outlet to split a cooling air flow blown towards the projector light source into a first split air flow and a second split air flow;
the projector light source comprises a first portion and a second portion, wherein the first split air flow is blowing towards and directly cooling the first portion, the second split air flow is blowing towards and directly cooling the second portion, and other portions of the projector light source are been cooling indirectly by heat conduction via the first portion and/or the second portion.
In the projector of the present invention, the first portion and the second portion are been cooling directly by the cooling air flows and other portions of the projector light source are been cooling indirectly by heat conduction via the first portion and/or the second portion. Hence, for a projector light source that requires different normal operating temperature for different portions, the cooling method that uses the direct cooling and the indirect cooling in combination is adapted to prevent temperatures of the first portion and the second portion from rising too high while still preventing other portions of the projector light source from falling to a too low temperature, thereby to ensure the desired normal operating temperatures of the projector light source.

### BRIEF DESCRIPTION OF THE SEVERAL VIEWS OF THE DRAWINGS

IiIG. 1 is a schematic view of a projector bulb cooling apparatus in the prior art;
FIG. 2 is a flowchart of an embodiment of a heat source cooling method according to the present invention;
FIG. 3 is a flowchart of another embodiment of the heat source cooling method according to the present invention;
FIG. 4 is a schematic view of an embodiment of a cooling air channel according to the present invention;
FIG. 5 is a schematic view of the cooling air channel of FIG. 4 after being improved;
FIG. 6 is a schematic view of the cooling air channel of FIG. 4 after being further improved;
FIG. 7 is a schematic view of an embodiment of a projector according to the present invention; and
FIG. 8 is a schematic view of another embodiment of the projector according to the present invention.

### DETAILED DESCRIPTION OF THE INVENTION

Hereinafter, the present invention will be described in detail with reference to embodiments thereof and the attached drawings.

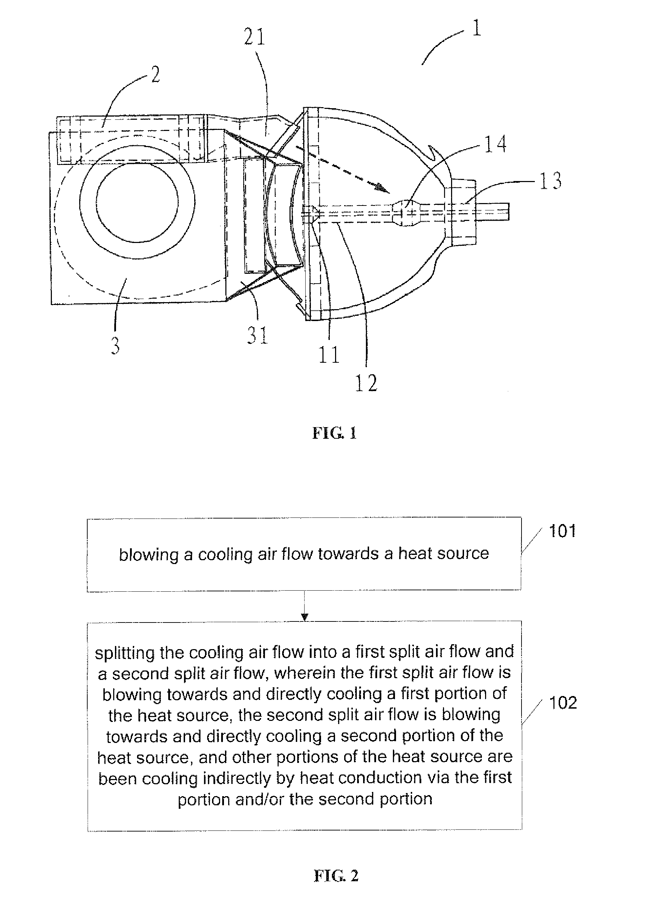

FIG. 2 shows an embodiment of a heat source cooling method according to the present invention. In this embodiment, the heat source cooling method comprises the following steps of:
Step 101: blowing a cooling air flow towards a heat source;
Step 102: splitting the cooling air flow into a first split air flow and a second split air flow, wherein the first split air flow is blowing towards and directly cooling a first portion of the heat source, the second split air flow is blowing towards and directly cooling a second portion of the heat source, and other portions of the heat source are been cooling indirectly by heat conduction via the first portion and/or the second portion.

Because, for the heat source that requires different normal operating temperatures for different portions, the first portion and the second portion are been cooling directly by the cooling air flows and other portions of the heat source are been cooling indirectly by heat conduction via the first portion and/or the second portion, the cooling method using the direct cooling and the indirect cooling in combination is adapted to prevent temperatures of the first portion and the second portion from rising too high while still preventing other portions of the heat source from falling to a too low temperature, thereby to ensure the desired normal operating temperatures of the heat source.

Specifically, the other portions of the heat source include a third portion, which is disposed between the first portion and the second portion and is been cooling indirectly by heat conduction via the first portion and/or the second portion. Under conditions that the third portion is disposed between the first portion and the second portion and requires a different normal operating temperature from the first portion and the second portion, it is essential to use the direct cooling and the indirect cooling in combination by splitting the cooling air flow into the first split air flow and the second split air flow.

In this embodiment, blowing the cooling air flow towards the heat source is implemented by: blowing the cooling air flow towards the heat source at an incident angle of 46°±5°. This is because that, when blown towards the heat source at an angle of 46°±5°the cooling air flow can be split in a desirable way so that the first split air flow and the second split air flow are blowing towards the first portion and the second portion of the heat source respectively to control the portions of the heat source within the respective desired normal operating temperature ranges.

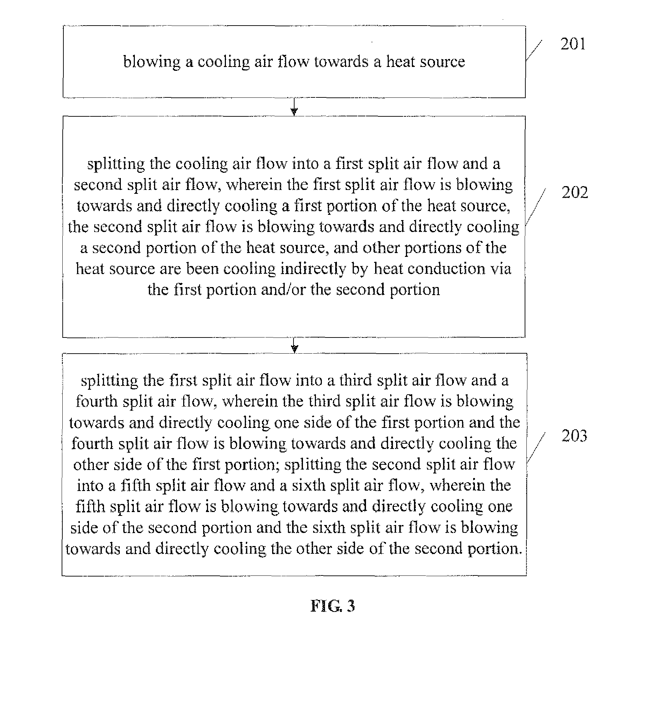

FIG. 3 shows another embodiment of the heat source cooling method of the present invention. In this embodiment, the heat source cooling method comprises the following steps of:
Step 201: blowing a cooling air flow towards a heat source;
Step 202: splitting the cooling air flow into a first split air flow and a second split air flow, wherein the first split air flow is blowing towards and directly cooling a first portion of the heat source, the second split air flow is blowing towards and directly cooling a second portion of the heat source, and other portions of the heat source are been cooling indirectly by heat conduction via the first portion and/or the second portion;
Step 203: splitting the first split air flow into a third split air flow and a fourth split air flow, wherein the third split air flow is blowing towards and directly cooling one side of the first portion and the fourth split air flow is blowing towards and directly cooling the other side of the first portion; splitting the second split air flow into a fifth split air flow and a sixth split air flow, wherein the fifth split air flow is blowing towards and directly cooling one side of the second portion and the sixth split air flow is blowing towards and directly cooling the other side of the second portion.

By using the third split air flow and the fourth split air flow to directly cool the two sides of the first portion respectively, inconsistent temperatures at the two sides of the first portion can be avoided to cool individual parts of the first portion uniform. Similarly, by using the fifth split air flow and the sixth split air flow to directly cool the two sides of the second portion respectively, individual parts of the second portion can be cooled uniformly.

According to the above descriptions, the heat source cooling method of this embodiment uses the direct cooling and the indirect cooling in combination. For the heat source that requires different normal operating temperatures for different portions, this is adapted to prevent temperatures of the first portion and the second portion from rising too high while still preventing other portions of the heat source from falling to a too low temperature, thereby to ensure the desired normal operating temperatures of the heat source.

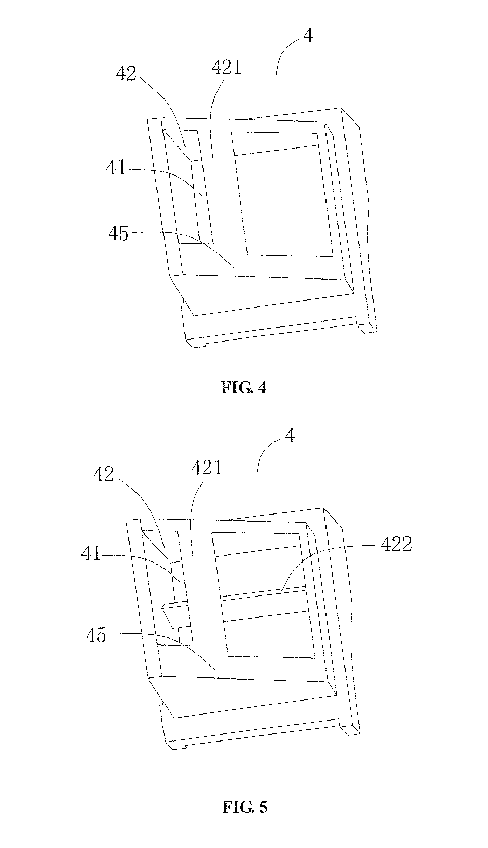

FIG. 4 shows an embodiment of a cooling air channel according to the present invention. In this embodiment, the cooling air channel 4 comprises an air inlet 41 and an air outlet 42, and a splitter plate 421 is disposed at the air outlet 42 to split the cooling air flow blown towards the heat source into a first split air flow and a second split air flow.

Because the splitter plate 421 is able to split the cooling air flow blown towards the heat source into the first split air flow and the second split air flow, multiple portions of the heat source can be cooled at the same time by the cooling air channel 4 when the first split air flow is blown towards and directly cools a portion of the heat source and the second split air flow is blown towards and directly cools another portion of the heat source. As compared to the prior art, this reduces the number of cooling air channels to be used and, thereby, decreases the cost.

In this embodiment, the splitter plate 421 is a planar splitter plate. The blocking and guiding actions of the planar splitter plate can help to split the cooling air flow. By appropriately adjusting the dimensions, the mounting location and mounting angle of the planar splitter plate depending on different working situations, the flow directions and flow rates of the first split air flow and the second split air flow can be controlled to satisfy various requirements on operating temperatures of individual portions of the heat source in different situations.

In other embodiments of the present invention, the splitter plate may also be a □-shaped or V-shaped splitter plate, and the direction in which the tip thereof is directed is opposite to the flow direction of the cooling air flow. This may strengthen the effect of guiding the cooling air flow by decreasing resistance to the cooling air flow. Likewise, by appropriately adjusting the dimensions, the mounting location and mounting angle of the □-shaped or V-shaped splitter plate, various requirements on operating temperatures of individual portions of the heat source can be satisfied in different situations.

As shown in FIG. 5, as an improvement on this embodiment, a uniform guide plate 422 is disposed adjacent to the air inlet 41, with a lengthwise direction of the uniform guide plate 422 being perpendicular to a lengthwise direction of the splitter plate 421. This is because that cooling air sources currently used are mostly centrifugal fans. The centrifugal fans are capable of delivering a wind field having a certain wind force, but the wind force is distributed nonuniformly and differs at different portions. When such a wind field acts directly on the heat source, each portion of the heat source experiences a rapid temperature drop at one side and a slow temperature drop at the other side, causing temperature difference within individual portions of the heat source. However, by disposition of the uniform guide plate 422, distribution of the wind field distribution will be altered under the guiding action of the uniform guide plate 422, thereby rendering distribution of the wind force uniform. Additionally, the first slit air flow and the second split air flow may be further split by the uniform guide plate 422 so that the further slit air flows are blown towards two sides of each portion of the heat source to avoid occurrence of temperature difference by making the cooling effect more uniform.

Further, to improve the guiding action of the uniform guide plate 422, the uniform guide plate 422 may be made to incline towards the center of the cooling air channel 4 at one side so as to better balance the air flow coming from the air inlet 41. With inclination of the uniform guide plate 422, the air flow blown towards the uniform guide plate 422 will be redirected by reflection from a surface thereof so that the air flow at portions with a larger wind force in the field can be guided to portions with a smaller wind force. Thereby, the air flow coming from the air inlet 41 gets better balanced.

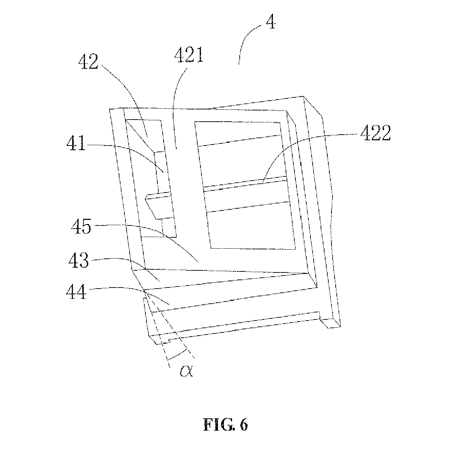

As shown in FIG. 6, the cooling air channel 4 is of a square shape. As a further improvement on this embodiment, one of the sides of the square is formed with an upright portion 43 at one end thereof and with an inclined portion 44 inclined towards the interior of the cooling air channel 4 at the other end thereof. The inclined portion 44 may further reflect the air flow blown to a surface thereof to guide the air flow from portions with a larger wind force in the field to portions with a smaller wind force, thereby to better balance the air flow coming from the air inlet 41.

However, to improve the guiding action of the inclination portion 44 in use, the section with the inclined portion 44 in the cooling air channel 4 must be made to have a length as long as possible; secondly, an angle α included between the plane where the upright portion 43 lies and the plane where the inclined portion 44 lies must be no greater than 18°.

It should be noted that, in other embodiments of the present invention, the air flow coming from the air inlet may also be balanced by use of only the uniform guide plate 422 or only the inclination portion.

Additionally, an end surface 45 of the air outlet 42 is an inclined surface in this embodiment. The purpose of designing the end surface 45 as an inclined surface is, on one hand, to fit well with the heat source and, on the other hand, to avoid obstruction to light rays from the heat source when the heat source is an illuminator.

According to the above descriptions, when the first split air flow is blown towards and directly cools a portion of the heat source and the second split air flow is blown towards and directly cools another portion of the heat source, multiple different portions of a single heat source can be cooled at the same time by the cooling air channel 4 of this embodiment. As compared to the prior art, this reduces the number of cooling air channels to be used and, thereby, decreases the cost.

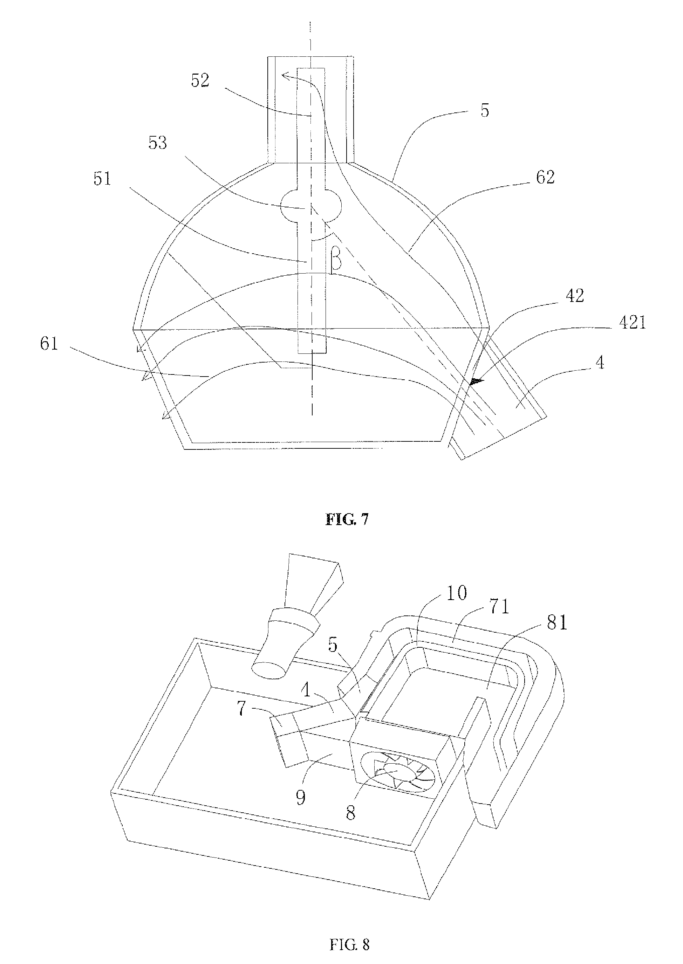

FIG. 7 shows an embodiment of a projector of the present invention. In this embodiment, the projector comprises the aforesaid cooling air channel 4. The cooling air channel 4 is provided with a cooling fan (not shown) at the air inlet 41 thereof and with a projector light source 5 at the air outlet 42 thereof, and a splitter plate 421 is disposed at the air outlet 42 to split a cooling air flow blown towards the projector light source 5 into a first split air flow 61 and a second split air flow 62.

The projector light source 5 comprises a first portion 51 and a second portion 52. The first split air flow 61 is blowing towards and directly cooling the first portion 51, the second split air flow 62 is blowing towards and directly cooling the second portion 52, and other portions of the projector light source 5 are been cooling indirectly by heat conduction via the first portion 51 and/or the second portion 52.

Because for the projector light source 5 that requires different normal operating temperatures for different portions, the first portion 51 and the second portion 52 are been cooling directly by the cooling air flows and other portions of the projector light source 5 are been cooling indirectly by heat conduction via the first portion 51 and/or the second portion 52, the cooling method that uses the direct cooling and the indirect cooling in combination is adapted to prevent temperatures of the first portion 51 and the second portion 52 from rising too high while still preventing other portions of the projector light source from falling to a too low temperature, thereby to ensure the desired normal operating temperatures of the projector light source 5.

Additionally, this embodiment cools a plurality of portions of the projector light source 5 by use of a single cooling fan and a single cooling air channel 4. This reduces the number of cooling fans and cooling air channels to be used and, thereby, decreases the cost.

Specifically, the other portions of the projector light source 5 include a third portion 53, which is disposed between the first portion 51 and the second portion 52 and is been cooling indirectly by heat conduction via the first portion 51 and/or the second portion 52.

Structures and functions of the cooling air channel 4 in this embodiment are just the same as those described in the embodiment of the cooling air channel of the present invention, and thus will not be described again herein. However, it should be noted that, for the cooling air channel 4 in this embodiment, the flow direction of the cooling air flow at the air outlet 41 and the axis of the projector light source 5 include an angle β of 46°. In a state as shown in FIG. 7, the flow direction of the cooling air flow at the air outlet 42 is as indicated by the dashed line, and the axis of the projector light source 5 is along the vertical direction, with an angle of 46° being included therebetween. When the cooling air flow flows out of the air outlet 42 at the angle of 46°, the first split air flow 61 is blown towards and directly cools the first portion 51, the second split air flow 62 is blown towards and directly cools the second portion 52, and the third portion 53 is indirectly cooled by heat conduction via the first portion 51 and the second portion 52. In this way, the operating temperatures of the first portion 51, the second portion 52 and the third portion 53 can be controlled within optimal ranges.

In other embodiments of the present invention, the direct of the cooling air flow flowing out of the air outlet 42 may vary within a range of 46±5° depending on practical working conditions.

FIG. 8 shows another embodiment of the projector of the present invention. The projector of this embodiment is substantially the same as that of the previous embodiment, so only differences thereof will be described hereinafter.

In this embodiment, a system fan 8 is disposed inside the projector near the cooling fan 7 of the cooling air channel 4, and a baffle 9 is disposed between the system fan 8 and the cooling fan 7. The system fan 8 is adapted to cool the interior of the projector as a whole, while the cooling fan 7 is adapted to cool the projector light source 5. As the system fan 8 and the cooling fan 7 are disposed adjacent to each other, a differential pressure tend to arise in a region between the system fan 8 and the cooling fan 7 when both fans are operating at the same time. Therefore, the baffle 9 is disposed between the system fan 8 and the cooling fan 7 to avoid such a phenomenon, which would otherwise have a complex influence on the cooling process of the projector light source 5.

Additionally, a cooling air exhaust channel 71 for the projector light source and a system cooling air exhaust channel 81 are disposed inside the projector, and a partition 10 is disposed between the cooling air exhaust channel 71 and the system cooling air exhaust channel 81. The partition 10 may also mitigate the influence of the system fan 8 on the cooling fan 7.

According to the above descriptions, because for the projector light source 5 of this embodiment that requires different normal operating temperatures for different portions, the first portion 51 and the second portion 52 are cooled directly by the cooling air flows and other portions of the projector light source 5 are cooled indirectly by heat conduction via the first portion 51 and/or the second portion 52, the cooling method that uses the direct cooling and the indirect cooling in combination is adapted to prevent temperatures of the first portion 51 and the second portion 52 from rising too high while still preventing other portions of the projector light source 5 from falling to a too low temperature, thereby to ensure the desired normal operating temperatures of the projector light source 5.

What described above are only exemplary embodiments of the present invention. However, scope of the present invention is not merely limited thereto, and any alterations or substitutions that will readily occur to those skilled in the art within the spirit of the present invention still fall within the scope of the present invention. Therefore, the scope of the present invention shall be determined by the claims.

## Claims

1. A heat source cooling method, comprising: blowing a cooling air flow towards the heat source;
and being **characterized in that** it further comprises :
splitting the cooling air flow into a first split air flow and a second split air flow, wherein the first split air flow is blowing towards and directly cooling a first portion of the heat source, the second split air flow is blowing towards and directly cooling a second portion of the heat source, and other portions of the heat source are been cooling indirectly by heat conduction via the first portion and/or the second portion.

2. The heat source cooling method as claimed in Claim 1, being **characterized in that**, the other portions of the heat source include a third portion, which is disposed between the first portion and the second portion and is been cooling indirectly by heat conduction via the first portion and/or the second portion.

3. The heat source cooling method as claimed in Claim 1 or 2, being **characterized in that**, the step of blowing the cooling air flow towards the heat source is implemented by: blowing the cooling air flow towards the heat source at an incident angle of 46°±5°.

4. The heat source cooling method as claimed in Claim 1 or 2, being **characterized in that**:
splitting the first split air flow into a third split air flow and a fourth split air flow, wherein the third split air flow is blowing towards and directly cools one side of the first portion and the fourth split air flow is blowing towards and directly cools the other side of the first portion;
splitting the second split air flow into a fifth split air flow and a sixth split air flow, wherein the fifth split air flow is blowing towards and directly cools one side of the second portion and the sixth split air flow is blowing towards and directly cools the other side of the second portion.

5. A cooling air channel, comprising an air inlet and an air outlet, and being **characterized in that**, a splitter plate is disposed at the air outlet to split a cooling air flow blown towards the heat source into a first split air flow and a second split air flow.

6. The cooling air channel as claimed in Claim 5, being **characterized in that**, the splitter plate is a planar splitter plate, a □-shaped splitter plate, or a V-shaped splitter plate, and a direction in which the tip of the □-shaped splitter plate or the V-shaped splitter plate is directed is opposite to the flow direction of the cooling air flow.

7. The cooling air channel as claimed in Claim 5 or 6, being **characterized in that**: a uniform guide plate is disposed adjacent to the air inlet, with a lengthwise direction of the uniform guide plate being perpendicular to a lengthwise direction of the splitter plate,

8. The cooling air channel as claimed in Claim 7, being **characterized in that**: one side of the uniform guide plate is inclined towards the center of the cooling air channel to balance the air flow coming from the air inlet.

9. The cooling air channel as claimed in Claim 5 or 6, being **characterized in that**: the cooling air channel is of a square shape, and one of the sides of the square is formed with an upright portion at one end thereof and with an inclined portion inclined towards the interior of the cooling air channel at the other end thereof.

10. The cooling air channel as claimed in Claim 9, being **characterized in that**, an angle included between a plane where the upright portion lies and a plane where the inclined portion lies is no greater than 18°.

11. The cooling air channel as claimed in Claim 5 or 6, being **characterized in that**, an end surface of the air outlet is an inclined surface.

12. A projector, comprising a cooling air channel, wherein the cooling air channel is provided with a cooling fan at an air inlet thereof and with a projector light source at an air outlet thereof, the projector being **characterized in that**, a splitter plate is disposed at the air outlet to split a cooling air flow blown towards the projector light source into a first split air flow and a second split air flow;
the projector light source comprises a first portion and a second portion, wherein the first split air flow is blowing towards and directly cooling the first portion, the second split air flow is blowing towards and directly cooling the second portion, and other portions of the projector light source are been cooling indirectly by heat conduction via the first portion and/or the second portion.

13. The projector as claimed in Claim 12, being **characterized in that**, the other portions of the projector light source include a third portion, which is disposed between the first portion and the second portion and is been cooling indirectly by heat conduction via the first portion and/or the second portion.

14. The projector as claimed in Claim 12 or 13, being **characterized in that**, a uniform guide plate is disposed adjacent to the air inlet, with a lengthwise direction of the uniform guide plate being perpendicular to a lengthwise direction of the splitter plate.

15. The projector as claimed in Claim 12 or 13, being **characterized in that**, the cooling air channel is of a square shape, and one of the sides of the square is formed with an upright portion at one end thereof and with an inclined portion inclined towards the interior of the cooling air channel at the other end thereof.

16. The projector as claimed in Claim 12 or 13, being **characterized in that**, a system fan is disposed inside the projector and a baffle is disposed between the system fan and the cooling fan.

17. The projector as claimed in Claim 16, being **characterized in that**, a cooling air exhaust channel for the projector light source and a system cooling air exhaust channel are disposed inside the projector, and a partition is disposed between the cooling air exhaust channel and the system cooling air exhaust channel

18. The projector as claimed in Claim 12 or 13, being **characterized in that**, the flow direction of the cooling air flow at the air outlet and the axis of the projector light source include an angle of 46°±5°.
